(19) Europäisches Patentamt
European Patent Office
Office européen des brevets

(11) Veröffentlichungsnummer: **0 066 137**
**B1**

# (12) EUROPÄISCHE PATENTSCHRIFT

(45) Veröffentlichungstag der Patentschrift: **31.07.85**

(51) Int. Cl.[4]: **C 08 G 77/38**, C 09 K 19/40, C 08 G 77/04, C 08 L 83/04

(21) Anmeldenummer: **82104154.8**

(22) Anmeldetag: **13.05.82**

## (54) Flüssig-kristalline Eigenschaften aufweisende, vernetzte Organopolysiloxane.

(30) Priorität: **15.05.81 DE 3119459**

(43) Veröffentlichungstag der Anmeldung: **08.12.82 Patentblatt 82/49**

(45) Bekanntmachung des Hinweises auf die Patenterteilung: **31.07.85 Patentblatt 85/31**

(84) Benannte Vertragsstaaten: **BE CH DE FR GB IT LI NL**

(56) Entgegenhaltungen:
**EP - A - 0 029 162**
**DE - A - 1 808 669**

**MAKROMOLEKULARE CHEMIE, RAPID COMMUN., Band 2, Nr. 4, 15. Juni 1981, Seiten 317-322 H. FINKELMANN et al.: "Investigations on liquid crystalline polysiloxanes 3a. Liquid crystalline elastomers - A new type of liquid crystalline material"**

(73) Patentinhaber: **Consortium für elektrochemische Industrie GmbH, Zielstattstrasse 20, D-8000 München 70 (DE)**

(72) Erfinder: **Finkelmann, Heino, Dr. Dipl.-Chem., Goslarsche Strasse 59, D-3392 Clausthal-Zellerfeld (DE)**
Erfinder: **Rehage, Günther, Prof. Dr., Einersberger Blick 17, D-3392 Clausthal-Zellerfeld (DE)**
Erfinder: **Kreuzer, Franz-Heinrich, Dr. Dipl.-Chem., Josef-Gerstener Strasse 14D, D-8033 Martinsried (DE)**

**EP 0 066 137 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gemäß DE-OS 2 944 591 wurden bereits Organopolysiloxane bekannt, die flüssig-kristalline Phasen aufweisen. Es handelt sich hierbei im wesentlichen um lineare Organopolysiloxane, die aufgepfropfte mesogene Moleküle tragen.

Aufgabe der Erfindung war es, dreidimensional vernetzte, also nicht flüssige Systeme aufzufinden, die flüssig-kristalline Eigenschaften aufweisen. Es war mithin der Zielkonflikt zu lösen, Systeme zu finden, die insbesondere in bezug auf Verformbarkeit bzw. Fließverhalten typische Feststoffeigenschaften — andererseits die für bestimmte Flüssigkeiten charakteristischen flüssig-kristallinen Eigenschaften besitzen sollen.

Gegenstand der Erfindung sind flüssig-kristalline Eigenschaften aufweisende Organopolysiloxane, die an das Organopolysiloxangerüst chemisch gebundene, gleiche oder verschiedene, mesogene Moleküle tragen, die dadurch gekennzeichnet sind, daß sie dreidimensional vernetzt sind.

Die erfindungsgemäßen Organopolysiloxane können nematische, chiral nematische oder smektische Eigenschaften aufweisen.

Im Rahmen der Erfindung liegen sowohl solche erfindungsgemäße Organopolysiloxane, die als Elastomere zu bezeichnen sind, also einen relativ niedrigen Vernetzungsgrad aufweisen, als auch hochvernetzte, als Harze zu bezeichnende Organopolysiloxane.

Die erfindungsgemäßen flüssig-kristalline Eigenschaften aufweisenden Organopolysiloxane können, wenn sie durch ihre Herstellungsart charakterisiert werden, nach den auch bereits bisher auf dem Gebiet vernetzter Organopolysiloxane bekannten Vernetzungsmechanismen vulkanisiert werden.

Beispiele hierfür sind mittels freier Radikale vernetzte Systeme, die vor der Vernetzung, abgesehen von den mesogenen Gruppen keine funktionellen Gruppen oder keine anderen funktionellen Gruppen außer Alkenylgruppen enthalten. Derartige Systeme sind zugänglich durch Vernetzenlassen von mit mesogenen Molekülen gepfropften Organopolysiloxanketten in Gegenwart von freie Radikale bildenden Substanzen, wie organischen Peroxiden und dergleichen. Enthalten die mit mesogenen Molekülen gepfropften Organopolysiloxanketten 1 bis 4 Mol-% aliphatische Mehrfachbindungen, beispielsweise 1 bis 4 Mol-% Vinylgruppen, kann die Vernetzung auch durch elementaren Schwefel erfolgen.

Bevorzugte Systeme sind die durch Additionsvernetzung erhaltenen Systeme. Die dieser Vernetzungsart zugrunde liegende Reaktion ist die Addition von SiH-Funktionen an aliphatische Mehrfachbindungen in Gegenwart von derartige Reaktionen fördernden Katalysatoren.

Ein im Rahmen der Erfindung besonders bevorzugtes System wird gewonnen durch Reaktion eines Organo-Wasserstoff-Polysiloxans mit einem Gemisch aus Vinyl- oder Acetylengruppen aufweisenden mesogenen Molekülen und zumindest 2 Vinylgruppen aufweisendem Organopolysiloxan als Vernetzer, wobei das Gemisch eine in bezug auf die Anzahl von Si—H-Bindungen die 0,2- bis 2fache, vorzugsweise in etwa stöchiometrische Anzahl an Vinyl- oder Acetylengruppen aufweist in Gegenwart von die Addition von Si—H an die Vinyl- oder Acetylenfunktion förderndem Katalysator.

Vorzugsweise handelt es sich bei dem Organo-Wasserstoff-Polysiloxan um Poly-methyl-(H)-Siloxan mit Trimethyl- oder Dimethylsiloxyendgruppen. Die Anzahl der Si—H-Gruppen sollte dabei aus praktischen Gründen nicht die Anzahl der Si-Atome der Kette übersteigen.

Als Vernetzer dient zumeist Dimethylpolysiloxan, das in den endständigen Einheiten je eine Vinylgruppe aufweist. Der Anteil an Vernetzer beträgt, bezogen auf den Vinyl-Gehalt des Gemisches, zumeist 5 bis 50 Mol-%, vorzugsweise 10 bis 20 Mol-%.

Als Katalysator werden bevorzugt die auch bereits bisher für derartige Reaktionen eingesetzten Verbindungen des Platins, des Rutheniums, des Rhodiums oder des Palladiums eingesetzt, wie beispielsweise $PtCl_2$, $H_2PtCl_6 \cdot 6\,H_2O$, $Na_2PtCl_4 \cdot 4\,H_2O$, Pt-olefin-, Pt-alkohol-, Pt-ether-komplexe und andere.

Innerhalb des genannten Additionsvernetzungssystems lassen sich zahlreiche Variationen verwirklichen: So kann sowohl die Si—H-Funktion tragende Komponente als auch die Vinyl-Gruppe tragende Komponente oder beide genannten Komponenten, aus denen das Additionssystem gebildet wird, chemisch gebundene mesogene Moleküle aufweisen.

Eine weitere Modifikation erfindungsgemäßer flüssig-kristalliner Eigenschaften aufweisender vernetzter Siloxane ergibt sich durch Einsatz solcher b-funktioneller Substanzen als Vernetzer, wie beispielsweise Acryl- oder Methacrylsäure-allylester oder Allyl-epoxy-propyl-ether. Die Synthese derartiger vernetzter, chemisch gebundene mesogene Moleküle aufweisender Organopolysiloxane erfolgt am besten so, daß mit mesogenen Molekülen gepfropfte Organo-Wasserstoff-Polysiloxane, die durch Hydrolyse bzw. durch Kondensation mit mesogenen Molekülen modifizierter Silane oder durch Äquilibrieren entsprechender Siloxane zugänglich sind, in Gegenwart von beispielsweise Platinkatalysatoren mit den obengenannten bi-funktionellen Systemen zu einem Additionsprodukt umgesetzt werden, das schließlich unter Einwirkung von Radikalbildnern oder energiereicher Strahlung, wie beispielsweise UV-Strahlung, oder im Falle der Epoxyderivate mit Säureanhydriden oder Aminen vernetzt wird.

Als weiteres Vernetzungssystem, wobei Thioethergruppen als Vernetzungspunkte auftreten, kommt ein durch photochemische Reaktion mercapto-funktioneller Silane oder Siloxane mit aliphatische Mehrfachbindungen aufweisendem Organopolysiloxan zugängliches Additionssystem in Betracht. Im speziellen Fall wird ein in den endständigen Einheiten je eine Allylgruppe aufweisendes, mit

mesogenen Molekülen gepfropftes Organopolysiloxan mit einem mit Trimethylsiloxanresten endblokkierten, Methyl-mercapto-propyl-siloxaneinheiten aufweisendem Organopolysiloxan unter Einwirkung von UV-Strahlung vernetzt.

Weiterhin sind vernetzte Systeme bevorzugt, die durch Kondensationsreaktionen zugänglich sind. Derartige vernetzte Systeme werden erhalten durch Kondensation von in den endständigen Einheiten je eine kondensationsfähige Gruppe aufweisendem Organopolysiloxan mit einem zumindest drei kondensationsfähige Gruppen enthaltendem Silan oder zumindest drei kondensationsfähige Gruppen enthaltenden Teilhydrolysaten solcher Silane. Beispiele für kondensationsfähige Gruppen sind an Si-Atome gebundene Wasserstoff-, Hydroxyl-, Alkoxy-, Acyloxy-, Aminoxy-, Amin-, Acylamino-, Oximgruppen oder Phosphatgruppen. Die mesogenen Moleküle können an je einer der beiden Komponenten oder auch an beiden Komponenten chemisch gebunden sein.

Die Kondensationsreaktionen werden in Gegenwart von an sich bekannten Kondensationskatalysatoren durchgeführt. Beispiele hierfür sind insbesondere Verbindungen des Zinns, wie Dibutylzinndilaurat, Dibutylzinndiacetat und andere.

Die erfindungsgemäßen, flüssig-kristallinen Eigenschaften aufweisenden Siloxannetzwerke sind insbesondere chemisch gebundene, mesogene Moleküle aufweisende Methylpolysiloxane. Andere Beispiele für über Si—C-Bindung verknüpfte Substituenten sind Ethyl-, Propyl- und Phenylreste. Die genannten Gruppen werden durch entsprechende Auswahl der Ausgangsverbindungen eingeführt.

Als mesogene Moleküle kommen grundsätzlich alle, mesogene Eigenschaften aufweisenden Verbindungen in Betracht.

Mesogene Eigenschaften aufweisende Funktionen sind bereits in großem Umfang in der Literatur beschrieben. Es sei in diesem Zusammenhang auf eine zusammenfassende Darstellung verwiesen, von Dietrich Demus et al, »Flüssige Kristalle in Tabellen«, VEB Deutscher Verlag für Grundstoffindustrie, Leipzig, 1974.

Beispiele hierfür sind Derivate des Cyclohexans, wie Cyclohexyl-carbonsäure-phenylester, Cyclohexyl-phenyl-ester, Cyclohexyl-phenyl-ether, Cyclohexyl-benzole, Cyclohexyl-carbonsäure-cyclohexyl-ester, Di-cyclohexyl-derivate, Derivate des Stilbens, Derivate des Benzoesäure-phenylesters, Benzylidenaniline, Derivate des Azobenzols, Derivate des Acoxybenzols, Alkyl- und Alkoxyderivate des Biphenyls, Schiff'sche Basen, Steroide, wie Derivate des Cholesterins und des Cholestans.

Oftmals ist es aus anwendungsspezifischen Gründen erwünscht, daß die mesogenen Funktionen polare Gruppen, wie beispielsweise die Nitrilgruppe, enthalten, um einen hohen dielektrischen Anisotropieeffekt zu erhalten.

Zwischen der eigentlichen mesogenen Funktion und dem Organopolysiloxanrückgrat sollte eine flexible Verbindung bestehen, die am besten durch 3 bis 6 Methylen- oder Dimethylsiloxygruppen als Bindeglied zwischen dem Siloxanrückgrat und der eigentlichen mesogenen Funktion realisiert wird.

Die Aufpfropfreaktion mesogener Moleküle auf das Silan bzw. Organopolysiloxanrückgrat erfolgt günstigerweise durch die Addition einer Si—H-Funktion an eine aliphatische Mehrfachbindung. Bevorzugterweise werden deshalb solche mesogenen Moleküle eingesetzt, die Vinyl- oder Acetylengruppen aufweisen, insbesondere Derivate der genannten mesogenen Funktionen des Propens, des Butens, des Pentens, des Hexens, des Butins, des Pentins und des Hexins.

Die Verfahren zur Herstellung der erfindungsgemäßen vernetzten, flüssig-kristalline Eigenschaften aufweisenden Siloxane erfolgt entsprechend den bereits genannten Vernetzungstypen.

Ein bevorzugtes Herstellungsverfahren ist dadurch gekennzeichnet, daß Wasserstoff-Organo-Polysiloxan mit einem Gemisch aus Vinyl-substituierten, mesogenen Molekülen und einem in den endständigen Gruppen je eine Vinylgruppe aufweisendem Organopolysiloxan, wobei das Gemisch in bezug auf die Anzahl der im Reaktionsgemisch anwesenden Si—H-Funktionen eine in etwa stöchiometrische Menge an Vinylgruppen aufweist, in Gegenwart von die Addition von Si—H an aliphatische Mehrfachbindungen förderndem Katalysator umgesetzt wird.

Das genannte Verfahren ist insbesondere dazu geeignet, erfindungsgemäße, flüssig-kristalline Eigenschaften aufweisende Elastomere herzustellen.

Ein weiteres bevorzugtes Verfahren zur Herstellung flüssig-kristalliner Eigenschaften aufweisender, vernetzter Organopolysiloxane ist dadurch gekennzeichnet, daß Silane oder Gemische von Silanen der allgemeinen Formel

$$R_nSiR'_{4-n}$$

wobei

R ein mesogenes Molekül,
R' eine kondensationsfähige Gruppe und
n 0, 1, 2 oder 3

bedeuten, in Gegenwart eines Kondensationskatalysators vernetzen gelassen wird, wobei die Maßgabe erfüllt ist, daß zumindest ein Anteil solche Silane sind, für die n ungleich 0 ist und ein Anteil solche Silane, für die n 0 oder 1 ist.

Vorzugsweise beträgt der Anteil an Silanen, für die n ungleich 0 ist, also zumindest eine mesogene Funktion aufweisen, zumindest 50 Mol-%. Der Anteil an vernetzenden Silanen ohne mesogene Funktion liegt bei max. 50 Mol-%.

Die verfahrensgemäß anzuwendenden Druck- und Temperaturbedingungen für die genannten Verfahren liegen im auch bereits bisher für die jeweilige Vernetzungsreaktion typischen Rahmen.

Bei den erfindungsgemäßen, flüssig-kristalline Eigenschaften aufweisenden Elastomeren liegen die Phasenübergänge in etwa in dem Bereich, in dem auch die Phasenübergänge der unvernetzten, flüssig-kristalline Phasen aufweisenden Organopolysiloxane liegen, von denen sich die Netzwerke ableiten. Mit steigendem Vernetzungsgrad, insbesondere bei den harzartigen Spezies, wird die flüssig-kristalline Textur fixiert. Die Übergänge in den isotropen Zustand liegen in solchen Fällen oftmals über der Zersetzungstemperatur des Siloxans. Zur Erzielung einer möglichst einheitlichen Textur in bezug auf den flüssig-kristallinen Zustand empfiehlt es sich deshalb, im Falle der erfindungsgemäßen Harze bereits vor oder während der Vernetzung Maßnahmen zur Orientierung der mesogenen Funktionen vorzunehmen. Geeignete Maßnahmen hierfür sind Walzen, Streichen, Anlegen elektrischer Felder und dergleichen.

Die erfindungsgemäßen, flüssig-kristalline Eigenschaften aufweisenden vernetzten Siloxane lassen sich zur Temperaturindikation einsetzen. Derartige Anwendungen ergeben sich beispielsweise auf dem Sektor der Medizin, der zerstörungsfreien Werkstoffprüfung (Wärmeflußverfahren) oder bei der Lösung von Prüfproblemen in der Mikroelektronik. Ein wichtiges Anwendungsfeld eröffnet sich ferner in der optischen Anzeige elektrischer und magnetischer Felder (Optoelektronik). Weitere Anwendungsmöglichkeiten erschließen sich auf dem Gebiet der Informationsspeicherung der elektrographischen Verfahren, der Lichtmodulation oder beispielsweise der Verwendung als Bestandteil von Polarisationsfolien. Insbesondere eignen sich die erfindungsgemäßen Organopolysiloxane zur Beschichtung von Folien.

Die Erfindung wird anhand von Beispielen näher erläutert:

## Beispiel 1

### Herstellung eines flüssig-kristalline Phasen aufweisenden Elastomers

Es wird eine 50%ige toluolische Lösung von

a) 1 Mol eines mit Trimethylsiloxygruppen endblockierten 1 : 1-Mischpolymers aus Hydrogen-methyl-polysiloxan und Dimethylpolysiloxan (Kettenlänge entsprechend 120 Siloxy-Einheiten),
b) 0,45 Mol 4-Propen-2-oxy-benzoesäure-4'-methoxy-phenylester und
c) 0,05 Mol einer in den endständigen Gruppen je eine Vinylgruppe aufweisendem Dimethylpolysiloxan (Kettenlänge entsprechend 9 Dimethylsiloxy-Einheiten)

bereitet.

Die Lösung wird mit 10 ppm eines Platinkatalysators (Umsetzungsprodukt von Hexachloroplatinsäure mit n-Decen) versetzt und bei 60°C vernetzen gelassen, bis die Si—H-Absorptionsbande bei 2080 $cm^{-1}$ verschwunden ist.

Das vernetzte Polymer wird mit Toluol 2 Tage extrahiert, mit Methanol entquollen und schließlich im Vakuum getrocknet.

Das erhaltene Produkt wurde mit Hilfe eines Polarisationsmikroskops sowie durch Differentialscanning-Kalorimetrie (DSC) auf flüssig-kristalline Eigenschaften untersucht.

Ergebnis:

Tabelle 1

| Glastemperatur K | nematische Phase K | isotrope Phase K |
|---|---|---|
| 264 | 264—285 | ab 285 |

Die Übergangsenthalpie vom nematischen in den isotropen Zustand beträgt 0,82 J/g.

Beispiel 2

Die Arbeitsweise gemäß Beispiel 1 wird wiederholt mit der Abänderung, daß die Menge an mesogener Verbindung (gemäß b) 0,4 Mol und der Anteil an Vernetzer (gemäß c) 0,1 Mol beträgt.

Ergebnis:

Tabelle 2

| Glastemperatur K | nematische Phase K | isotrope Phase K |
|---|---|---|
| 263 | 263—283 | ab 283 |

Die Übergangsenthalpie vom nematischen in den isotropen Zustand beträgt 0,40 J/g.

Beispiel 3

Die Arbeitsweise gemäß Beispiel 1 wird wiederholt mit der Abänderung, daß als mesogene Komponente (gemäß b) 0,4 Mol einer Mischung aus 89 Mol-% 4-Propen-2-oxy-benzoesäure-4'-methoxy-phenylester und 11 Mol-% Cholesteryl-allyl-carbonat eingesetzt werden.

Ergebnis:

Tabelle 3

| Glastemperatur K | chiral nematische Phase K | isotrope Phase K |
|---|---|---|
| 261 | 261—308 | ab 308 |

Beispiel 4

Herstellung eines flüssig-kristalline Phasen aufweisenden Harzes

a) 10 g 4-Propen-2-oxy-benzoesäure-cholesterylester und 1,9 g Trichlorsilan werden in 36 g Methylenchlorid in Gegenwart von 100 Gew.-ppm Pt, bezogen auf das Gewicht der Lösung, in Form von Dicyclopentadienyl—$PtCl_2$ 3 Stunden unter Rückfluß gekocht. Danach werden 4 ml Methanol zugesetzt und weitere 2 Stunden unter Rückfluß gekocht. Schließlich wird das Lösungsmittel abgezogen. Das Zielprodukt I weist eine Klärtemperatur von 181° C auf.
b) In gemäß a) analoger Weise werden 10 g Propen-2-oxy-benzoesäure-4'-phenyl-phenylester mit 4,1 g Trichlorsilan in Gegenwart von 100 ppm Platinkatalysator umgesetzt. Nach Zugabe von 6 ml Methanol und Abziehen des Lösungsmittels wird das Zielprodukt II erhalten, das eine Klärtemperatur von 54° C aufweist.
c) Es werden im Gewichtsverhältnis 1 : 1 eine Mischung von I und II hergestellt und mit 4 Gew.-%, bezogen auf die Mischung, Dibutylzinndiacetat versetzt.

Die Mischung wird bei 60° C mit einer Gummiwalze auf eine Folie aus Celluloseacetat aufgewalzt. Durch diesen Walzvorgang wird eine Orientierung der mesogenen Funktionen zu einem flüssig-kristallinen Zustand mit einheitlich reflektierender, chiral nematischer Textur erzielt. Es bildet sich eine cholesterische Phase mit der Reflexionsfarbe gelbgrün aus. Im Verlauf von einer Stunde wird nun die Temperatur auf 120° C gesteigert. Nach 2 weiteren Stunden Temperung bei 120° C hat sich die Reflexionsfarbe nach blaugrün verschoben. Der Film ist in Toluol nicht mehr löslich. Der Übergang in den isotropen Zustand liegt über der Zersetzungstemperatur des Harzes.

Beispiel 5

Die Arbeitsweise gemäß Beispiel 1 wird wiederholt mit der Abänderung, daß als Organopolysiloxan (gemäß a) 1 Mol mit Trimethylsiloxygruppen endblockiertes Hydrogen-Methyl-polysiloxan (Kettenlänge entsprechend 120 Siloxy-Einheiten) eingesetzt wird.

Ergebnis:

Tabelle 4

| Glastemperatur K | nematische Phase K | isotrope Phase K |
|---|---|---|
| 273 | 273—335 | ab 335 |

Die Übergangsenthalpie vom nematischen in den isotropen Zustand beträgt 0,82 J/g.

Beispiel 6

Die Arbeitsweise gemäß Beispiel 2 wird wiederholt mit der Abänderung, daß als mesogene Verbindung (gemäß b) 0,4 Mol 4-Hexen-2-oxy-benzoesäure-4'-methoxy-phenylester eingesetzt wird.
Das vernetzte Polymer wird wie in Beispiel 1 beschrieben mit Toluol extrahiert und mit Methanol entquollen. Diese Arbeitsweise dient jedoch wie in den anderen Beispielen lediglich zur Objektivierung, daß tatsächlich die vernetzte Spezies flüssig-kristalline Eigenschaften aufweist.

Ergebnis:

Tabelle 5

| Glastemperatur K | smektische Phase K | isotrope Phase K |
|---|---|---|
| 253 | 253—332 | ab 332 |

Die Übergangsenthalpie in den isotropen Zustand beträgt 0,95 J/g.

**Patentansprüche**

1. Flüssigkristalline Phasen aufweisende Organopolysiloxane, die an das Organopolysiloxangerüst chemisch gebundene, gleiche oder verschiedene, mesogene Moleküle tragen, dadurch gekennzeichnet, daß sie dreidimensional vernetzt sind.

2. Organopolysiloxane nach Anspruch 1, dadurch gekennzeichnet, daß sie nematische bzw. chiral nematische Eigenschaften aufweisen.

3. Verfahren zur Herstellung von vernetzten Organopolysiloxanen nach Anspruch 1 und 2, dadurch gekennzeichnet, daß Wasserstoff-Organo-Polysiloxan mit einem Gemisch aus vinylsubstituierten, mesogenen Molekülen und einem in den endständigen Gruppen je eine Vinylgruppe aufweisendem Organopolysiloxan, wobei das Gemisch in bezug auf die Anzahl der im Reaktionsgemisch anwesenden Si—H-Funktionen eine zumindest stöchiometrische Menge an Vinylgruppen aufweist, in Gegenwart von die Addition von Si—H an aliphatische Mehrfachbindung förderndem Katalysator umgesetzt werden.

4. Verfahren zur Herstellung von Organopolysiloxanen nach den Ansprüchen 1 und 2, dadurch gekennzeichnet, daß Silane oder Gemische von Silanen der allgemeinen Formel

$$R_nSiR'_{4-n}$$

wobei

R ein mesogenes Molekül,
R' eine kondensationsfähige Gruppe und
n 0, 1, 2 oder 3

bedeuten, in Gegenwart eines Kondensationskatalysators vernetzen gelassen wird, wobei die Maßgabe erfüllt ist, daß zumindest ein Anteil solche Silane sind, für die n ungleich 0 ist und ein Anteil solche Silane, für die n 0 oder 1 ist.

5. Verwendung von Organopolysiloxanen nach Anspruch 1 und 2 auf den Gebieten der Optoelektronik, der Informationsspeicherung, der Prüftechnik, der Temperaturindikation, in elektrographischen Verfahren und als Bestandteil von Polarisationsfolien.

**Claims**

1. Organopolysiloxanes, having liquid crystalline phases, which carry the same or different mesogenic molecules chemically bonded to the organopolysiloxane structure, characterised in that they are three-dimensionally cross-linked.

2. Organopolysiloxanes according to claim 1, characterised in that they have nematic and/or chiral nematic properties.

3. Process for the manufacture of cross-linkes organopolysiloxanes according to claims 1 and 2, characterised in that a hydrogen-organo-polysiloxane is reacted, in the presence of a catalyst that promotes the addition of Si—H onto an aliphatic multiple bond, with a mixture of vinyl-substituted mesogenic molecules and an organopolysiloxane having a vinyl group in each of the terminal groups, the mixture having an at least stoichiometric amount of vinyl groups relative to the number of Si—H functions present in the reaction mixture.

4. Process for the manufacture of organopolysiloxanes according to claims 1 and 2, characterised in that silanes or mixtures of silanes of the general formula

$R_nSiR'_{4-n}$,

in which

R represents a mesogenic molecule,
R' represents a group that is capable of being condensed and
n represents 0, 1, 2 or 3,

are allowed to cross-link in the presence of a condensation catalyst, the proviso being fulfilled that at least a portion are silanes for which n is not equal to 0 and a portion are silanes for which n is 0 or 1.

5. Use of organopolysiloxanes according to claims 1 and 2, in the fields of optical electronics, data storage, testing technology, temperature indication, in electrographic processes and as a constituent of polarisation films.

**Revendications**

1. Poly-organosiloxanes ayant des phases à cristaux liquides, qui portent des molécules mésogènes, identiques ou différentes, chimiquement liées au squelette poly-organosiloxanique et qui sont caractérisés en ce qu'ils sont réticulés dans les trois dimensions.

2. Poly-organosiloxanes selon la revendication 1 caractérisés en ce qu'ils ont des propriétés nématiques ou des propriétés chirales nématiques.

3. Procédé de préparation de poly-organosiloxanes réticulés selon l'une des revendications 1 et 2, procédé caractérisé en ce qu'on fait réagir un poly-hydrogéno-organo-siloxane avec un mélange constitué de molécules mésogènes porteuses de radicaux vinyles et d'un poly-organosiloxane dont les radicaux terminaux renferment chacun un radical vinyle, le mélange contenant une quantité de radicaux vinyles au moins stoechiométrique par rapport au nombre des fonctions Si—H présentes dans le mélange réactionnel, en présence d'un catalyseur accélérant la fixation de Si—H sur une liaison multiple aliphatique.

4. Procédé de préparation de poly-organosiloxanes selon l'une des revendications 1 et 2, procédé caractérisé en ce qu'on fait réticuler, en présence d'un catalyseur de condensation, des silanes ou des mélanges de silanes répondant à la formule générale:

$R_nSiR'_{4-n}$

dans laquelle

R représente une molécule mésogène,
R' représente un radical condensable et
n est égal à 0, à 1, à 2 ou à 3,

avec la condition qu'il y ait au moins une certaine proportion de silanes pour lesquels n est différent de 0 et une certaine proportion de silanes pour lesquels n est égal à 0 ou 1.

5. Application de poly-organosiloxanes selon l'une des revendications 1 et 2 dans les domaines de l'optoélectronique, de la mémorisation d'informations, des techniques d'essais, de l'indication de la température et des procédés électrographiques ainsi que comme constituants de feuilles à polarisation.